# EUROPÄISCHE PATENTSCHRIFT

(11) **EP 0 318 542 B1**
(45) Veröffentlichungstag und Bekanntmachung des Hinweises auf die Patenterteilung: **12.05.1993**
(21) Anmeldenummer: 88904969.8
(22) Anmeldetag: 10.06.1988
(51) Int. Cl.: B29C 35/08, B60J 10/00, H05B 6/80

(54) **VERFAHREN ZUM ZUMINDEST TEILWEISEN AUSHÄRTEN VON DICHT- UND KLEBEMITTELN**
PROCESS FOR AT LEAST PARTIAL HARDENING OF SEALANTS AND ADHESIVES
PROCEDE DE DURCISSEMENT AU MOINS PARTIEL DE MATIERES D'ETANCHEITE ET D'ADHESIFS

(30) Priorität: 12.06.1987 DE 3719601
(43) Veröffentlichungstag der Anmeldung: 07.06.1989
(73) Patentinhaber: Teroson GmbH, 69046 Heidelberg (DE)
(72) Erfinder: DUCK, Edward, W., D-6901 Gaiberg (DE); SCHEFFLER, Ingolf, D-6908 Wiesloch (DE); HIRTHAMMER, Michael, D-6900 Heidelberg (DE)
(74) Vertreter: UEXKÜLL & STOLBERG
(86) Internationale Anmeldenummer: EP8800516
(87) Internationale Veröffentlichungsnummer: WO8809712

(56) Entgegenhaltungen:
- DE-B- 2 838 447
- DE-C- 1 085 625
- FR-A- 2 041 873
- FR-A- 2 358 366
- FR-A- 2 500 707
- FR-A- 2 508 267
- GB-A- 2 002 924
- US-A- 3 443 051
- US-A- 3 601 448
- US-A- 3 867 606
- US-A- 4 083 901
- US-A- 4 499 036

## Beschreibung

Die Erfindung bezieht sich auf ein Verfahren zum zumindest teilweisen Aushärten von Dicht- und Klebemittel, insbesondere bei der Direktverglasung von Kraftfahrzeugen, bei dem zumindest ein Teilbereich des Dicht- und Klebemittels durch Einstrahlung von Mikrowellenenergie erwärmt wird.

Es sind bereits Dicht- und Klebemittel vorgeschlagen worden (Deutsche Patentanmeldung P 37 05 427.9), die sowohl hitzeals auch feuchtigkeitshärtend sind, so daß sie durch kurzzeitiges Erhitzen verfestigt werden können und dann anschließend durch Feuchtigkeit aushärten. Hierbei handelt es sich um Einkomponenten-Polyurethan Dicht- und Klebmittel auf Basis von telechelen Isocyanat-Präpolymeren aus aromatischen Diisocyanaten in stöchiometrischem Überschuß und Polyolen, die einen Katalysator für Feuchtigkeitshärtung und ein blockiertes, durch Erhitzen aktivierbares Vernetzungsmittel enthalten.

Die einzusetzenden Polyurethanpräpolymeren werden auf an sich bekannte Weise aus überschüssigem aromatischen Diisocyanat und einem Polyol hergestellt. Geeignete aromatische Diisocyanate sind beispielsweise Diphenylmethandiisocyanat (MDI), Toluylendiisocyanat (TDI), Naphthalindiisocyanat, p-Phenylendiisocyanat und 1,3-bis(Isocyanatomethyl)benzol sowie m- oder p-Tetramethylxyloldiisocyanat (m-TMXDI bzw. p-TMXDI).

Als Polyolkomponente kommen Polyetherpolyole wie Polyethylenoxid, Polypropylenoxid und deren Copolymere, Polyesterpolyole sowie hydroxyfunktionelle Acrylate bzw. Methacrylate in Betracht.

Die bevorzugten Katalysatoren für die Feuchtigkeitshärtung der aromatischen Isocyanatpräpolymeren sind Zinnverbindungen wie Zinn(II)octoat, Dibutylzinnlaurat und Dibutylzinnmaleat. Ferner sind Organo-Quecksilber, -Blei- und -Wismuthverbindungen wie z.B. Phenylquecksilberacetat oder Bleinaphthenat brauchbar. Außerdem sind tertiäre Diamine, z.B. Dabco sowie cyclische Verbindungen, etwa Diacabicycloundecen (DBU) oder Kombinationen mit Schwermetallen geeignet.

Als blockierte, durch Erhitzen aktivierbare Vernetzungsmittel sind einmal komplexierte Amine, insbesondere die Komplexverbindung aus Methylendianilin (MDA) und NaCl, zu nennen. Die Formel dieser Komplexverbindung wird meist mit (MDA)₃.NaCl angegeben. Die Verbindung ist unter der Handelsbezeichnung "Caytur" von der Firma Uniroyal erhältlich. Durch Erhitzen auf Temperaturen zwischen 120 und 160^{o}C zerfällt die Komplexverbindung thermisch und das freigesetzte Methylendianilin führt zur Vernetzung des Polyurethanpräpolymeren. Üblicherweise wird der MDA-Komplex in unterstöchiometrischer Menge eingesetzt. Bei der kurzzeitigen Erhitzung wird dann zwar nur eine unvollständige Vernetzung erreicht, die dem System jedoch eine ausreichende mechanische Anfangsfestigkeit verleiht. Die vollständige Aushärtung und das Erreichen der Endfestigkeit bewirkt die Reaktion des Isocyanatpräpolymeren mit Feuchtigkeit.

Als Vernetzungsmittel kommen weiterhin polyamino- oder polyhydroxyfunktionelle Verbindungen wie das Methylendianilin oder Polyesterpolyole in Betracht, welche mikroverkapselt sind und dadurch bei Raumtemperatur für eine Reaktion mit dem Isocyanatpräpolymeren nicht zur Verfügung stehen. Die Verkapselung kann in besonders günstiger Weise mit Hilfe von Methylmethacrylat oder anderen (Meth)acrylaten erfolgen, welche erst bei Temperaturen oberhalb 100^{o}C erweichen. Wenn auch die polyamino- oder -hydroxyfunktionelle Verbindung bei Raumtempe ratur fest ist, aber ab ca. 60^{o}C erweicht, dann führt ein Erhitzen auf Temperaturen oberhalb 100^{o}C zum Erweichen oder Quellen der Hülle der Mikrokapseln und damit zum Freisetzen des Vernetzungsmittels. Solche Vernetzungsmittel weisen den Vorteil auf, daß sie kein NaCl oder anderes Metallsalz enthalten.

Ein derartiges Einkomponenten-Polyurethansystem zeichnet sich durch seine ausgezeichnete Haftung auf Metall und vorbehandeltem Glas aus und ist daher für die Direkteinglasung von Automobilen besonders geeignet. Bei Zusatz entsprechender Füllstoffe und Rheologiehilfsmittel besitzt das System extrem gutes Standvermögen, so daß es maschinell in der gewünschten Profilform auf die Glasscheiben aufgetragen und mit diesen in die Kfz-Karosserie eingesetzt werden kann.

Aus der US-A 4 083 901 ist ein Verfahren zur Aushärtung von Polyurethansystemen bekannt, bei dem die Erwärmung durch Einstrahlung von Mikrowellen erfolgt. Bei dem bekannten Verfahren wird das auszuhärtende Substrat in eine für Mikrowellen transparente Gießform in einem Mikrowellenofen dem Mikrowellenfeld ausgesetzt. Das Verfahren ist nicht zur Aushärtung von Klebe- und Dichtungsstellen an großen und sperrigen Gütern geeignet, wie Autokarosserien oder großen Isolierglasscheiben, bei denen im Verhältnis zur Gesamtabmessung nur sehr kleine Bereiche mit Mikrowellenenergie zu beaufschlagen sind.

Aus der GB-A-2 002 924 ist die Erwärmung großvolumiger Objekte, die für eine einheitliche Erwärmung in einem Mikrowellenofen ungeeignet sind, wie bei der Vulkanisierung der Reifen großer Nutzfahrzeuge, durch lokalisierte Einstrahlung von Mikrowellenenergie bekannt, indem ein Mikrowellen-Radiator die zu erwärmenden Bereiche auf vorgegebenem Weg abtastet. Es finden sich dort keine Anregungen, lokale Mikrowelleneinstrahlung zur Aushärtung von Dicht- und Klebemitteln anzuwenden, und insbesondere in Produktionsprozessen auf die Klebestellen sperriger Gegenstände anzuwenden. Ferner ergeben sich keine Hinweise, wie die Beaufschlagung mit Mikrowellenenergie zu erfolgen hat, damit eine Fixierung der zu verklebenden Teile in einem kurzen, für den Ablauf in einer Produktionsstraße typischen Zeitintervall erfolgen kann.

In der US-A-4 499 036 ist ein Verfahren zur Herstellung von Schaumstoffmaterialien auf Basis von Kautschuklatex beschrieben, bei dem das Material durch pulsweise Einstrahlung von Mikrowellenenergie in einem Mikrowellenofen erwärmt wird.

Um die oben beschriebenen hitze- und feuchtigkeitsaushärtende Dicht- und Klebemittel, insbesondere bei der Direktverglasung von Kraftfahrzeugen, möglichst einfach verarbeiten zu können, wird in einem Verfahren zum zumindest teilweisen Aushärten von Dicht- und Klebemitteln, bei welchem das Dicht- und Klebemittel durch Einstrahlung von Mikrowellenenergie erwärmt wird, erfindungsgemäß die Erwärmung durch örtlich begrenzte Beaufschlagung mit Mikrowellenenergie vorgenommen, und die Mikrowellenenergie impulsartig in einer ersten und wenigstens einer weiteren Impulsgruppe, deren Impulsamplituden jeweils vom Anfang zum Ende der Gruppe abnehmen, und zwischen den Impulsgruppen dauerstrichartig aufgebracht.

Es ist daher erforderlich, das Dicht- und Klebemittel an ein oder mehreren, vorzugsweise an einander gegenüberliegenden Stellen mit Mikrowellenenergie zu beaufschlagen, um auf diese Weise die Scheibe mittels des Dicht- und Klebemittels sicher in ihrer Halterung zu befestigen, so daß das Dicht- und Klebemittel dann während des weiteren Fertigungsvorganges des Kraftfahrzeuges durch Feuchtigkeit, insbesondere Luftfeuchtigkeit vollständig aushärten kann.

Es ist auch möglich, ein langsamer aushärtendes Dicht- und Klebemittel zu verwenden, das vor dem Verbinden mit der Scheibe mit Mikrowellenenergie beaufschlagt wird. Wenn die thermisch aktivierbare Komponente von geringerer Reaktivität ist, wie z.B. di- oder trifunktionelle Polyolkomponenten, kann vor dem Zusammensetzen der durch Klebung zu verbindenden Teile das gesamte Dicht- und Klebemittel mit Mikrowellenenergie beaufschlagt werden.

Durch diese impulsartige Aufbringung der Mikrowellenenergie erfolgt zunächst eine verhältnismäßig hohe, jedoch kurzzeitige Energiezufuhr, so daß ein Teilbereich des Dicht- und Klebemittels erheblich erwärmt wird, ohne daß es zu Verbrennungs- oder Zersetzungserscheinungen kommt. Zwischen der Zufuhr des ersten Mikrowellenimpulses und der Zufuhr des folgenden Impulses der ersten Impulsgruppe kommt es innerhalb des Dicht- und Klebemittels durch Wärmeleitung zu einem Temperaturausgleich, so daß durch den nachfolgenden Impuls keine Überhitzung des zunächst relativ hocherwärmten Bereichs des Dicht- und Klebemittels erfolgt. Wegen der bereits vorgenommenen Erwärmung durch den ersten Impuls und die dadurch erhöhte Temperatur des Dicht- und Klebemittels erfolgt dannach die Zuführung einer geringeren Energiemenge, indem das Dicht- und Klebemittel mit Mikrowellenimpulsen mit abnehmenden Amplituden beaufschlagt wird.

Nach der Beaufschlagung des Dicht- und Klebemittels mit der Mikrowellenenergie der ersten Impulsgruppe hat bereits eine gewisse Aushärtung des Dicht- und Klebemittels eingesetzt, so daß sich dessen Viskosität erheblich erhöht hat. Zur Fortsetzung des Aushärtungsvorganges wird dann eine weitere Gruppe von Mikrowellenenergie-Impulsen aufgebracht, deren Amplituden vom Anfang zum Ende der Gruppe abnehmen.

Zwischen den beiden Impulsgruppen wird dem Dicht- und Klebemittel dauerstrichartig Mikrowellenenergie zugeführt, um auf diese Weise eine erhöhte Temperatur aufrechtzuerhalten und eine gleichmäßige Temperaturverteilung zu erreichen.

Insbesondere wenn die Gesamtbeaufschlagung mit Mikrowellenenergie innerhalb einer verhältnismäßig kurzen Zeit von beispielsweise 60 Sekunden ablaufen soll, kann vor der ersten Impulsgruppe Mikrowellenenergie in Form eines Einzelimpulses aufgebracht werden, dessen Amplitude und Energieinhalt größer sind als diejenigen des ersten Impulses der ersten Impulsgruppe, so daß mit diesem ersten Impuls zunächst eine verhältnismäßig große Energiemenge zugeführt wird, die jedoch gerade noch keine Zersetzung und/oder Verbrennung des Dicht- und Klebemittels bewirkt, aber durch Wärmeleitung innerhalb des Dicht- und Klebemittels während der Pause zwischen dem Einzelimpuls und dem ersten Impuls der ersten Impulsgruppe eine deutliche Temperaturerhöhung im gesamten Querschnitt des Dicht- und Klebemittels hervorgerufen wird.

Wenn das erfindungsgemäße Verfahren beispielsweise bei der Direktverglasung von Kraftfahrzeugen eingesetzt werden soll, befindet sich das auszuhärtende Dicht- und Klebemittel üblicherweise zwischen der einzusetzenden Glasscheibe und einem metallischen Rahmen. Für den Fall einer solchen Verbindung von Metallteil und nicht-metallischem Werkstück ist es zweckmäßig, das Metallteil im Bereich des Dicht- und Klebemittels vorzuwärmen, etwa auf eine Temperatur von 75^{o}C bis 100^{o}C, vorzugsweise 80^{o}C bis 95^{o}C, um auf diese Weise die Ableitung von Wärme im Übergangsbereich zwischen Metallteil und Dicht- und Klebemittel aus dem Dicht- und Klebemittel zu vermindern und so die zugeführte Mikrowellenenergie im wesentlichen auf das Dicht- und Klebemittel einwirken zu lassen.

Zur Durchführung des erfindungsgemäßen Verfahrens bei mit der Scheibe in Eingriff stehendem Dicht- und Klebemittel kann eine Vorrichtung verwendet werden, bei der mit dem die Mikrowellenenergie erzeugenden Magnetron ein Mikrowellenleiter, etwa ein Hohlleiter gekoppelt ist, aus dem die Mikrowellenenergie auf das Dicht- und Klebemittel abstrahlbar ist.

Hierzu kann beispielsweise am Austrittsende des Hohlleiters ein Abstrahlelement angebracht sein, das in unmittelbare Nachbarschaft des Dicht- und Klebemittels bringbar ist, so daß durch entsprechende Positionierung und Führung des Abstrahlelementes die gewünschte räumlich begrenzte Beaufschlagung des Dicht- und Klebemittels mit Mikrowellenenergie stattfindet.

Dabei ist es auch möglich, das Abstrahlelement an einem Roboterarm zu haltern und gesteuert an die gewünschten Stollen des Dicht- und Klebemittels zu bringen und benachbart zu diesem zu bewegen.

Die Erfindung wird im folgenden anhand der schematisch und stark vereinfacht Ausführungsbeispiele zeigenden Figuren näher erläutert.
- Figur 1: zeigt eine Vorrichtung zur Beaufschlagung mit Mikrowellenenergie mit einem Abstrahlelement, das sich benachbart zum Randbereich einer mittels einer Dicht- und Klebemittel eingesetzten Frontscheibe einer Kraftfahrzeug-Karosserie befindet.
- Figur 2: zeigt schematisch die Verwendung eines Dipolelementes als Abstrahlelement zur Aushärtung von Dicht- und Klebemittel zur Verbindung eines nicht-metallischen und eines metallischen Bauteils.
- Figur 3: zeigt in einer Darstellung entsprechend Figur 2 eine Anordnung zur Verbindung von zwei nicht-metallischen Bauelementen durch ein Dicht- und Klebemittel.
- Figur 4: zeigt einen Aufbau ähnlich Figur 1, wobei als Abstrahlelement ein sich verjüngender Hohlleiter vorgesehen ist.
- Figur 5: zeigt die Lage zweier Mikrowellenenergie abstrahlender, miteinander verbundener Hohlleiter bezüglich einer Scheibe.
- Figur 6: zeigt in perspektivischer Darstellung den Aufbau eines der Hohlleiter aus Figur 5.
- Figur 7: zeigt in einer Darstellung entsprechend Figur 6 einen anderen Aufbau eines Hohlleiters aus Figur 5.
- Figur 8: zeigt in einer Darstellung entsprechend Figur 1 eine Vorrichtung, mit der mehrere, im Abstand voneinander liegende Stellen des Dicht- und Klebemittels für die Frontscheibe des Kraftfahrzeugs gleichzeitig mit Mikrowellenenergie beaufschlagt werden können.
- Figur 9: zeigt in einer prinzipiellen Seitenansicht eine Vorrichtung mit einem für Mikrowellenenergie durchlässigen Schlauch oder Rohr, das sich durch einen Hohlraum erstreckt.
- Figur 10: zeigt einen Schnitt entlang der Linie X-X aus Figur 9.
- Figuren 11-13: zeigen in Diagrammen die für ein unterschiedliche Viskositäten aufweisendes Dicht- und Klebemittel aufzubringende Mikrowellenenergie.
- Figur 14: zeigt in einem Diagramm entsprechend Figuren 11 bis 13 die erforderliche Mikrowellennergie bei geringerer Schichtdicke des Dicht- und Klebemittels.
- Figuren 15-17: zeigen in Diagrammen das impulsförmige Aufbringen von Mikrowellenenergie.

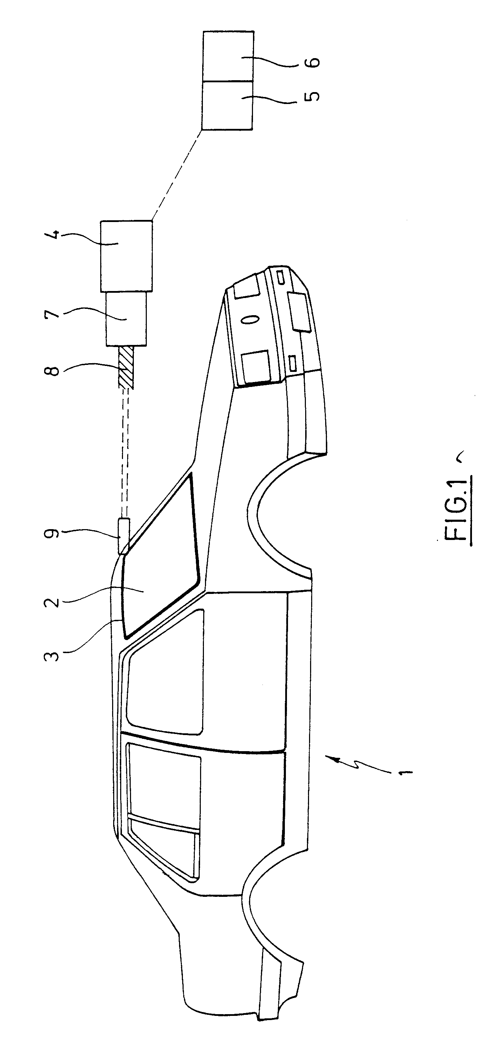

Die in Figur 1 dargestellte Vorrichtung enthält ein übliches Magnetron 4 zur Erzeugung von Mikrowellenenergie, das mit einer Stromversorgungseinrichtung 5 und einer Steuerschaltung 6 verbunden ist. Der Ausgangskreis des Magnetrons 4 ist in üblicher Weise über einen Zirkulator 7 mit einem Hohlleiter 8 verbunden, das an seinem freiem Ende ein Abstrahlelement 9 trägt, aus dem die Mikrowellenenergie möglichst eng gebündelt in die Umgebung abgestrahlt werden kann.

Wie dargestellt, befindet sich das Abstrahlelement 9 benachbart zum oberen Rand einer Frontscheibe 2, die unter Zwischenschaltung eines wärme- und feuchtigkeitshärtenden Dicht- und Klebemittels 3 in die Karosserie 1 eines Kraftfahrzeugs eingesetzt bzw. an diese angesetzt ist. Dadurch kann die Mikrowellenenergie aus dem Abstrahlelement 9, teilweise durch das mikrowellendurchlässige Glas der Scheibe 2 hindurch, das Dicht- und Klebemittel 3 in den mit Mikrowellenenergie beaufschlagten Bereichen erwärmen und dort eine zumindest teilweise Aushärtung bewirken.

Wie ohne weiteres klar ist, kann das Abstrahlelement 9, etwa von einem Roboterarm gehalten entlang des gesamten Randes der Scheibe 2 geführt werden, um in diesem Bereich eine Aushärtung des Dicht- und Klebemittels 3 zu bewirken. Es ist jedoch auch möglich, die Aushärtung durch entsprechende Führung des Abstrahlelementes 9 nur bereichsweise vorzunehmen, um auf diese Weise die Scheibe 2 mit Hilfe des Dicht- und Klebemittels in ihrer Lage zu fixieren, während die vollständige Aushärtung des Dicht- und Klebemittels 3 danach durch Feuchtigkeit stattfindet.

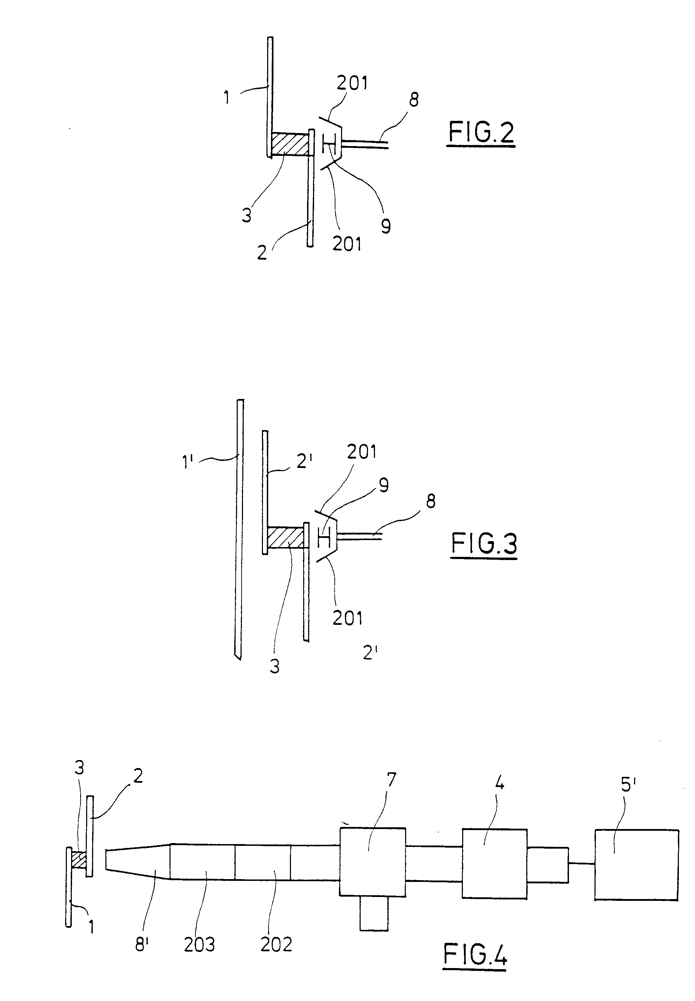

Wie in Figur 2 schematisch angedeutet, kann das Abstrahlelement 9 aus einem Dipol bestehen, dem über den Hohlleiter 8 bzw. ein Koaxialkabel die Mikrowellenenergie zugeführt wird. Seitlich vom Dipolstrahler 9 sind metallische Reflektoren 201 angeordnet, die eine seitliche Ausbreitung der Mikrowellenenergie verhindern.

Das zur Verbindung der Glasscheibe 2 mit der aus Metall bestehenden Karosserie 1 dienende Dicht- und Klebemittel 3 befindet sich benachbart zum Dipolstrahler 9, wobei zwischen diesem und dem Dicht- und Klebemittel 3 die Glasscheibe 2 liegt. Das so gebildete System aus Dipolstrahler 9, Glasscheibe 2, Dicht- und Klebemittel 3 und metallischer Karosserie 1 wird so eingestellt, daß sich ein Resonanzfall für die abgestrahlte Mikrowellenenergie ergibt.

Wenn mit einer Anordnung gemäß Figur 2 zwei Bauelemente 2' (Figur 3) verbunden werden sollen, die aus nicht-metallischem Material, etwa Kunststoff oder Glas bestehen, so wird benachbart zu dem vom Dipolstrahler 9 entfernten Bauteil 2' eine Metallplatte 1' angeordnet und das System wiederum auf Resonanz eingestellt, um die Mikrowellenenergie besonders wirksam werden zu lassen.

Eine entsprechende Bearbeitung kann auch mit einer Vorrichtung erfolgen, wie sie schematisch in Figur 4 dargestellt ist, bei der gleiche Bauteile wie in Figur 1 mit gleichen Bezugszeichen und entsprechende Bauteile mit gleichen Bezugszeichen und zusätzlich ' bezeichnet sind.

Wie dargestellt, wird eine örtlich begrenzte Beaufschlagung eines zwischen einer Glasscheibe 2 und einem Karosserieteil 21 befindlichen Dicht- und Klebemittels 3 mit Hilfe eines Hohlleiters 8' vorgenommen, der sich zu seiner Austrittsöffnung verjüngt. Diesem Hohlleiter wird die Mikrowellenenergie vom von einer Stromversorgungseinrichtung 5 gespeisten Magnetron 4 über einen Zirkulator 7, einen Richtkoppler 202 und einen Tuner 203 zugeführt.

Der in dieser Vorrichtung verwendete Tuner 203 ermöglicht mittels in den Hohlraum des Hohlleiters 8' hineinragender Justierstäbe eine optimale Anpassung für die abzustrahlende Mikrowellenenergie, während die in der Zeichenebene erfolgende Verjüngung des Hohlleiters 8' von einer Weite von 26 mm auf 20 mm erfolgt, um so eine Bündelung der Mikrowellenenergie auf das Dicht- und Klebemittel 3 zu bewirken.

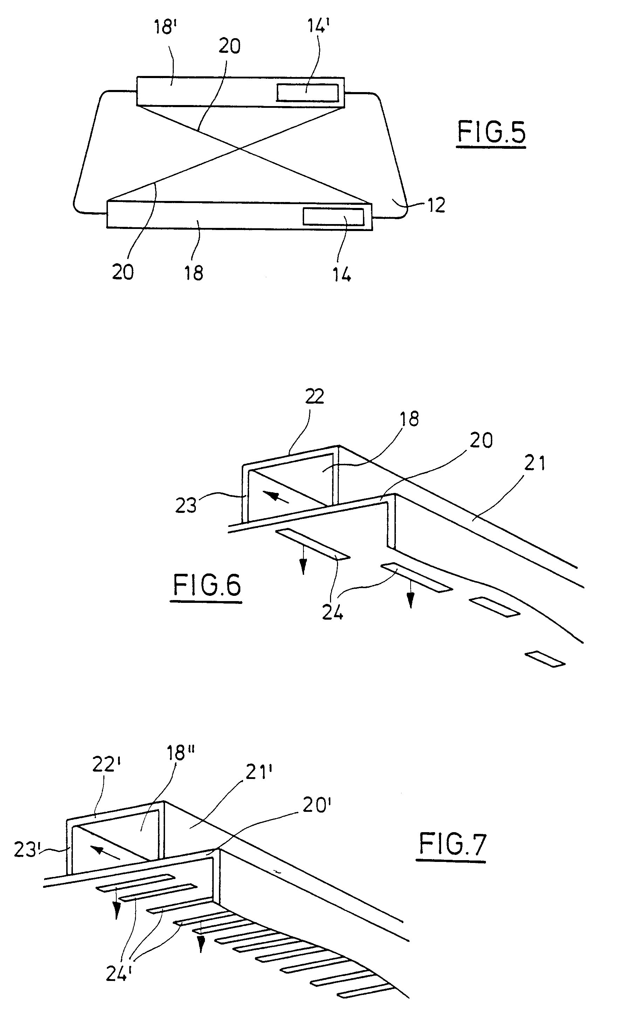

Ein zumindest teilweises Aushärten von entsprechendem Dicht- und Klebemittel kann auch mit einer Vorrichtung erfolgen, wie sie in Figur 5 schematisch gezeigt ist. Diese Vorrichtung enthält zwei durch Streben 20 fest miteinander verbundene Hohlleiter 18, 18', und auf jedem dieser Hohlleiter ist ein ihn speisendes Magnetron 14, 14' montiert. Der Abstand der Hohlleiter 18, 18' ist so gewählt, daß sie sich mit ihren Langsachsen im Bereich gegenüberliegender Kanten der Scheibe 12 befinden.

Die Hohlleiter 18, 18' können beispielsweise entsprechend dem Hohlleiter 18 aus Figur 3 aufgebaut sein, also einen rechteckförmigen Querschnitt mit Seitenwänden 21 und 23, einer unteren Wand 20 und einer oberen Wand 22 aufweisen. In der unteren Wand 20, die im Betrieb der Scheibe 12 und damit auch dem auszuhärtenden Dicht- und Klebemittel zugewandt ist, befinden sich schlitzartige, sich in Richtung der Längsachse des Hohlleiters 18 erstreckende Durchtrittsöffnungen 24.

Im Betrieb wird die Mikrowellenenergie vom Magnetron in den Hohlleiter eingespeist und wandert in Richtung von dessen Längsachse, wie dies durch den einen Pfeil in Figur 6 angedeutet ist. Infolge der in bekannter Weise dimensionierten und angeordneten Durchtrittsöffnungen 24 tritt dabei Mikrowellenenergie durch diese Durchtrittsöffnungen hindurch aus und gelangt entsprechend der Richtung der beiden Pfeile auf den Randbereich der Scheibe 12 und durch diesen hindurch in das Dicht- und Klebemittel sowie auch in das benachbart zur Kante der Scheibe 12 befindliche Dicht- und Klebemittel, um dieses in dem beaufschlagten Bereich zumindest teilweise aushärten zu lassen.

Eine andere Form eines in der Vorrichtung gemäß Figur 5 zu verwendenden Hohlleiters ist in Figur 7 dargestellt. In diesem Hohlleiter 18'' mit den Seitenwänden 21' und 23', der oberen Wand 22' und der unteren Wand 20' sind in der Wand 20' sich quer zur Längsachse des Hohlleiters 18'' erstreckende, schlitzförmige Durchtrittsöffnungen 24' vorhanden, durch die Mikrowellenenergie in gleicher Weise austritt, wie durch die Durchtrittsöffnungen 24 gemäß Figur 3.

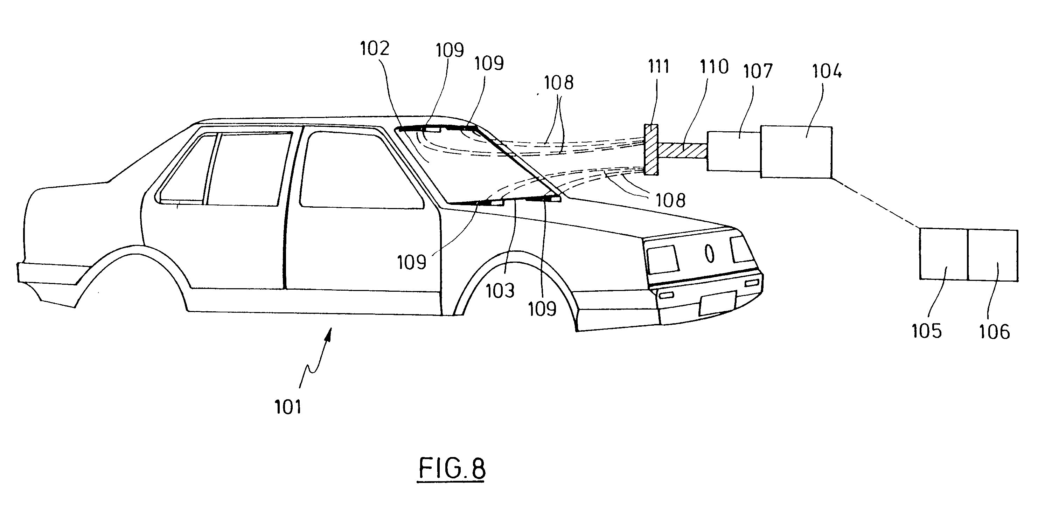

Die in Figur 8 dargestellte Vorrichtung ähnelt derjenigen aus Figur 1, und gleiche Teile sind mit um "100" erhöhten Bezugszeichen bezeichnet, so daß die meisten der übereinstimmenden Teile nicht noch einmal erläutert werden.

An dem vom Magnetron 104 über den Zirkulator 107 gespeisten Koaxialkabel 110 ist bei dieser Vorrichtung ein Verteilerelement 111 angeschlossen, von dem aus vier Leiter 108, etwa Hohlleiter ausgehen, an deren Enden Abstrahlelemente 109 befestigt sind. Mittels dieser Abstrahlelemente können vier im Abstand voneinander liegende Bereiche gleichzeitig mit Mikrowellenergie beaufschlagt werden, so daß vier Bereiche des zwischen Karosserie 101 und Scheibe 102 befindlichen Dicht- und Klebemittels 103 ausgehärtet werden können, um auf diese Weise die Scheibe 102 in ihrer Lage zu fixieren.

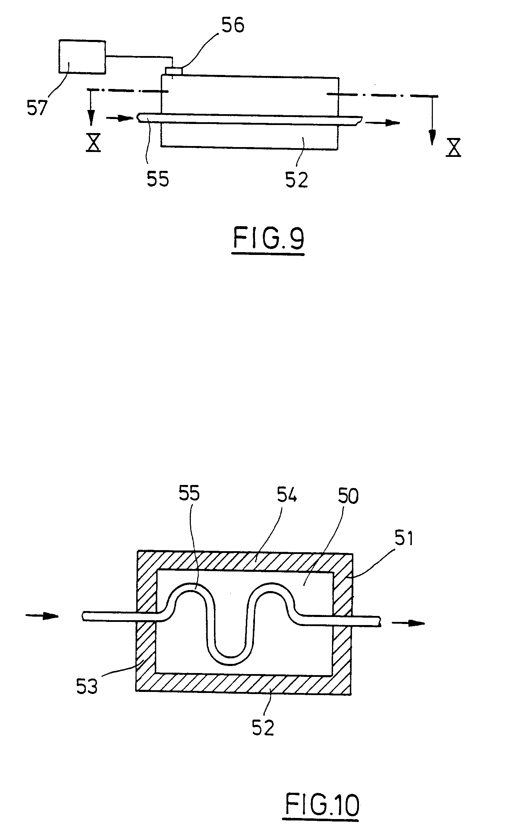

Soll das Dicht- und Klebemittel, das bei Erwärmung langsam aushärtet, vor dem Einsetzen in die Karosserie erwärmt werden, so kann eine Vorrichtung gemäß Figuren 9 und 10 verwendet werden. Diese enthält einen von Wänden 51, 52, 53 und 54 umschlossenen Hohlraum, durch den sich ein Schlauch oder Rohr 55 erstreckt, das für Mikrowellenenergie durchlässig ist. Über einen Koppler 56 kann in den Hohlraum 50 von einem Magnetron 57 Mikrowellenenergie eingespeist werden.

Wird das Dicht- und Klebemittel durch den Schlauch bzw. das Rohr 55 hindurchgepumpt, so wird es mit Mikrowellenenergie beaufschlagt und erwärmt, worauf es dann zur Befestigung einer Scheibe in einer Autokarosserie verwendet werden kann. Bei diesem Vorgehen muß die Aushärtungscharakteristik so gewählt werden, daß die "Topfzeit" (verbleibende Verarbeitungszeit) hinreichend lang ist, um eine gute Benetzung während der Endmontage zu gewährleisten.

Zur weiteren Erläuterung der Erfindung dienen die nachstehend beschriebenen Beispiele.

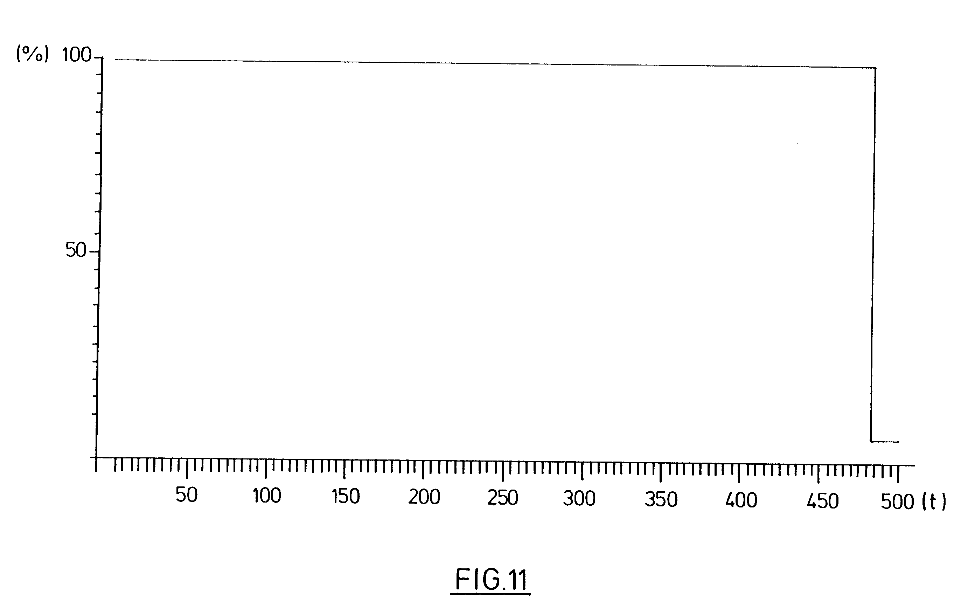

In den zu den Beispielen gehörenden Diagrammen gemäß Figuren 11 bis 17 ist in der Horizontalen die Zeit aufgetragen, wobei die Zahlen jeweils halbe Sekunden bezeichnen, d.h. die Zahl 40 bezeichnet 20 Sekunden, während in der Senkrechten die abgestrahlte Mikrowellenenergie in Prozent der maximalen Sendeleistung der verwendeten Vorrichtung aufgetragen ist.

In diesem Zusammenhang sei erwähnt, daß die in den Diagrammen aufgetragenen Amplituden für die Energie nur insoweit miteinander vergleichbar sind, als sie sich auf die gleiche Vorrichtung beziehen, weil durch Einsatz unterschiedlicher Abstrahlelemente deutlich unterschiedliche Anteile der abgestrahlten Energiemengen auf das auszuhärtende Dicht- und Klebemittel einwirken.

### Beispiel 1

In einer Probenanordnung mit einer Glasscheibe von 25 mm x 100 mm x 4 mm und einem mit Automobil-Decklack beschichteten Stahlblechstreifen von 25 mm x 100 mm x 1 mm, die mit einem haftvermittelnden Polyurethanprimer (TEROSTAT 8510 der Teroson GmbH für die Glasseite, TEROSTAT 8520 der Teroson GmbH für die Metallseite) vorbehandelt waren, wurde als Dicht- und Klebemittel eine Zusammensetzung aus folgenden Komponenten verwendet:
52,44 Gew.% Polyether-diisocyanat (30% Weichmachergehalt)
31,35 Gew.% Ruß und Calciumcarbonat im Gewichtsverhältnis 2:1
13,97 Gew.% C₇-C₁₁-Phthalat als Weichmacher
0,20 Gew.% Nickel-dibutyldithiocarbamat
0,04 Gew.% Dibutylzinnmaleat
2,00 Gew.% Komplexverbindung (MDA)₃NaCl ("Caytur" der Fa. Uniroyal),
und in einem Bereich von 25 mm x 5 mm und einer Schichtdicke von 5 mm aufgetragen. Dieser Versuchsaufbau wurde mittels einer Vorrichtung gemäß Figur 4, die mit einer Frequenz von 2,45 GHz arbeitet und eine Dauer-Leistung von 500 Watt hat, 4 Minuten mit Mikrowellenenergie beaufschlagt, wobei die Menge der aufgebrachten Mikrowellenenergie so eingestellt wurde, daß sich nach dieser Zeit eine vollständige Aushärtung des Dicht- und Klebemittels ergab.

Die aufzubringende Mikrowellenenergie für das verwendete Dicht- und Klebemittels ist für unterschiedliche Viskositäten in den Figuren 11 bis 13 dargestellt.

Die Viskositäten des verwendeten Dicht- und Klebemittels wurden durch Ermittlung des sogenannten Spritzwertes gemessen, wobei der Spritzwert die Menge an Dicht- und Klebemittel in Gramm ist, die in einer Minute aus einer Düsenkartusche mit einem Fassungsvermögen von 310 ml und einem Düsendurchmesser von 4,0 mm bei einem Druck von 4 bar herausgepreßt wurde. Dieser Spritzwert ist somit um so niedriger, je höher die Viskosität des Dicht- und Klebemittels ist.

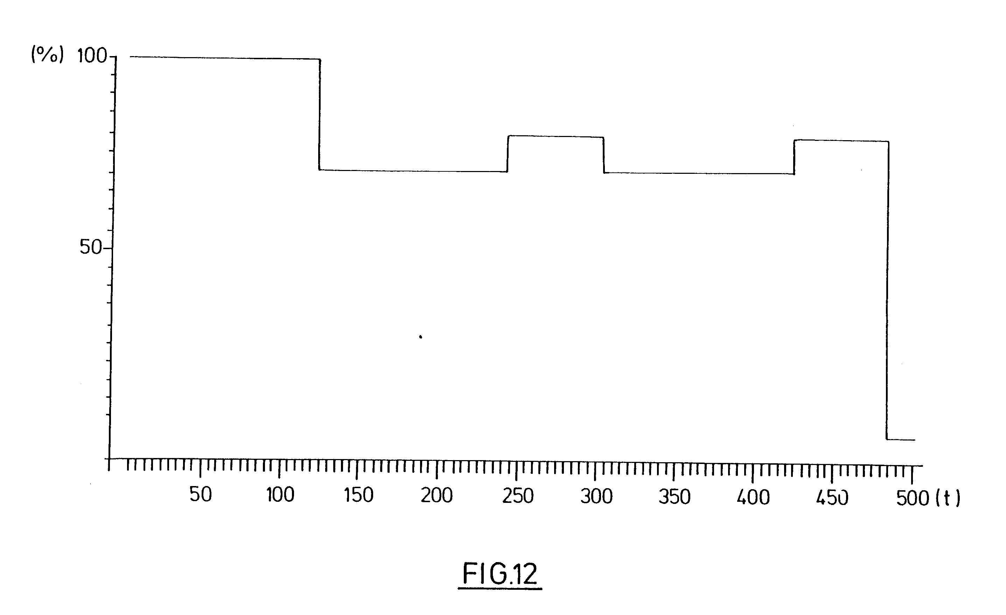

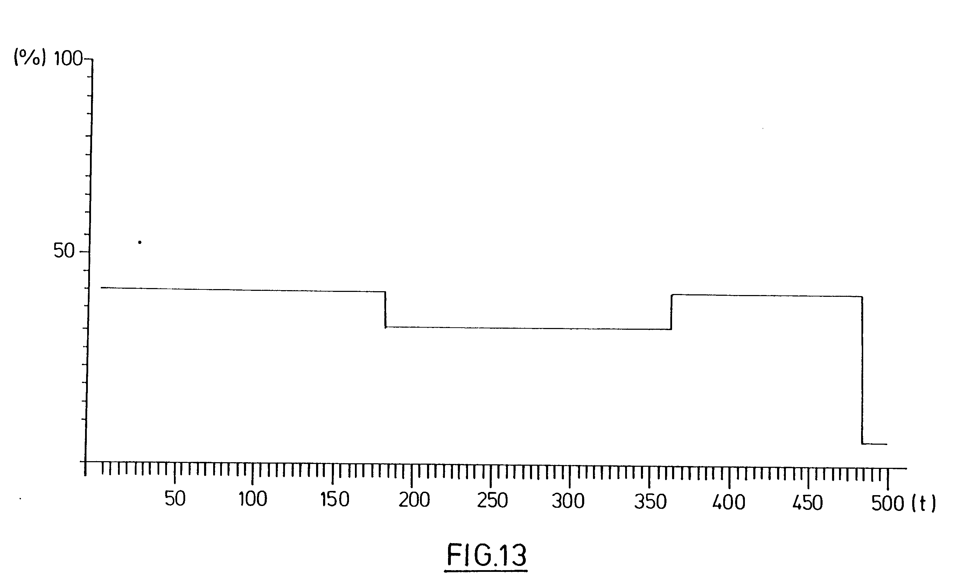

Die Viskosität des Dicht- und Klebemittels für den Versuch gemäß Figur 11 betrug 5 g/min., diejenige für den Versuch gemäß Figur 12 17 g/min. und diejenigen für den Versuch gemäß Figur 13 38 g/min.

Die Figuren 11 bis 13 zeigen, daß die zur Aushärtung aufzubringende Mikrowellenenergie um so größer ist, je höher die Viskosität des Dicht- und Klebemittels ist.

### Beispiel 2

Der Versuch gemäß Figur 13 des Beispiels 1 wurde wiederholt und zusätzlich wurde der gleiche Versuch mit dem einzigen Unterschied einer Schichtdicke von 2 mm statt 5 mm gemäß Figur 13 durchgeführt.

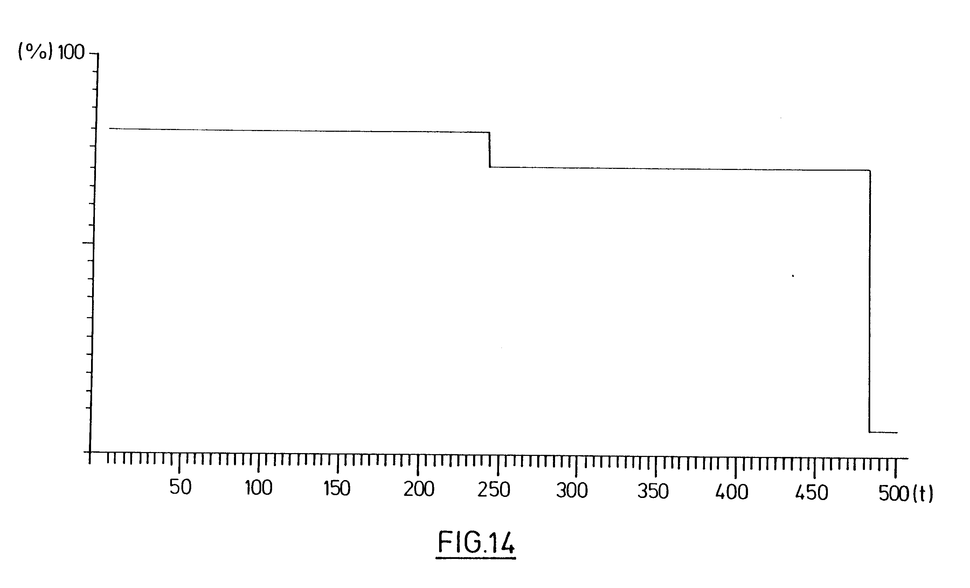

Das Ergebnis des letztgenannten Versuches ist in Figur 14 dargestellt und man erkennt, daß bei Verringerung der Schichtdicke von 5 mm gemäß Figur 13 auf 2 mm gemäß Figur 14 eine deutlich größere Menge an Mikrowellenenergie aufgebracht werden muß, um das Dicht- und Klebemittel auszuhärten.

### Beispiel 3

Es wurde die gleiche Probenanordnung wie in den Beispielen 1 und 2 eingesetzt, jedoch mit unterschiedlichen Schichtstärken und mit einer Vorrichtung zur Aufbringung von Mikrowellenenergie wie sie in Figur 2 gezeigt ist. Diese Vorrichtung hat eine Nennleistung von 500 Watt und arbeitete mit einer Frequenz der Mikrowellenstrahlung von 2,45 GHz.

Die Einstrahlung von Mikrowellenenergie erfolgte während einer Zeitspanne von 270 Sekunden und im wesentlichen impulsartig, wobei die Energiezufuhr so gesteuert wurde, daß das Dicht- und Klebemittel nach Ablauf der Versuchszeit von 270 Sekunden ausgehärtet war.

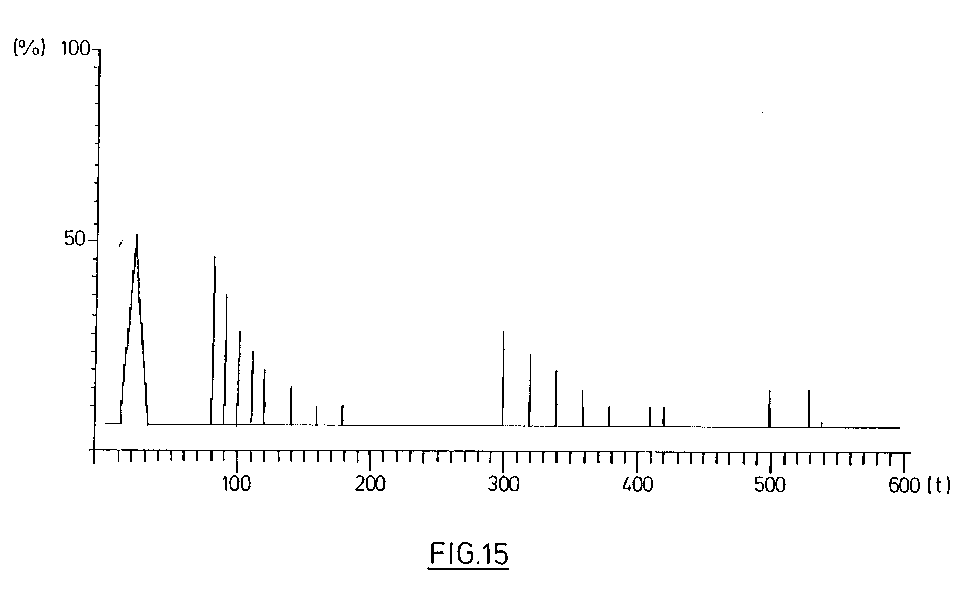

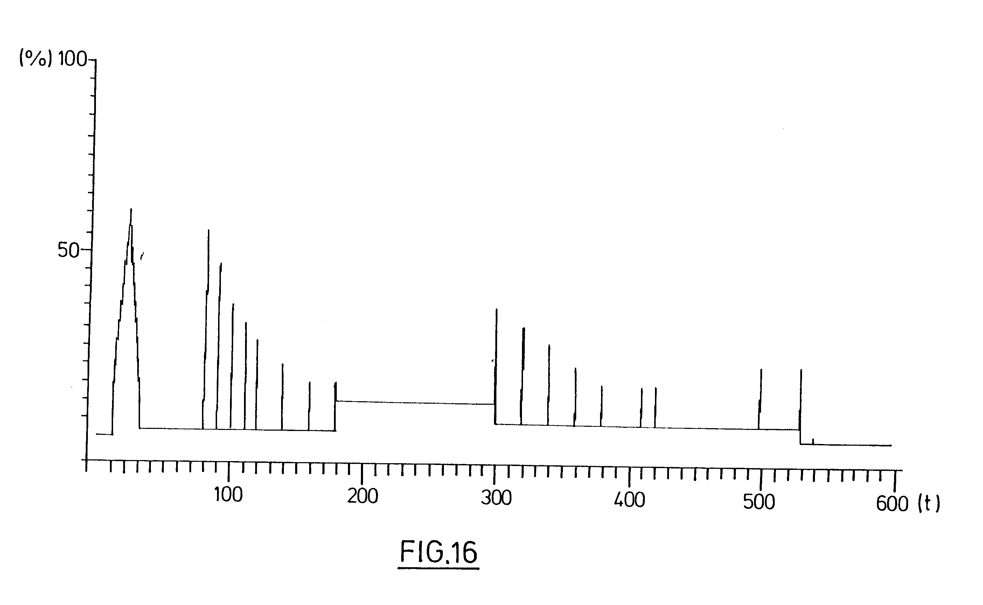

Wie in den Figuren 15 und 16 zu erkennen ist, wurde zunächst ein verhältnismäßig großer Impuls zugeführt und dann nach einer Pause von etwa 50 Sekunden eine erste Impulsgruppe aufgebracht, deren erster Impuls eine kleinere Amplitude aufwies und eine geringe Energiemenge enthielt als der zuerst aufgebrachte Impuls und deren gleiche Impulsbreiten aufweisenden Impulse allmählich abnehmende Amplituden aufweisen. Nach einer größeren Pause, die beim Versuch gemäß Figur 16 zur kontinuierlichen Zufuhr einer verhältnismäßig geringen Energiemenge verwendet wurde, wurde dann eine zweite Impulsgruppe aufgebracht, deren Impulse eine geringere Größe und einen größeren Abstand voneinander hatten als die Impulse der ersten Impulsgruppe und deren Impulsamplituden allmählich abnahmen.

Im Versuch gemäß Figur 15 wurde das Dicht- und Klebemittel mit einer Schichtdicke von 4 mm bis 5 mm und Versuch gemäß Figur 16 mit einer Schichtdicke von 2 mm bis 3 mm eingesetzt, und man erkennt, daß für die geringere Schichtdicke eine größere Energiemenge aufgebracht werden mußte.

### Beispiel 4

Es wurde ein Probenaufbau entsprechend dem Versuch gemäß Figur 15 mit einer Schichtdicke des Dicht- und Klebemittels von 5 mm eingesetzt und eine impulsförmige Bestrahlung mit Mikrowellenenergie mittels einer Vorrichtung gemäß Figur 2 für eine Zeitspanne von 60 Sekunden durchgeführt, um das Dicht- und Klebemittel vollständig auszuhärten.

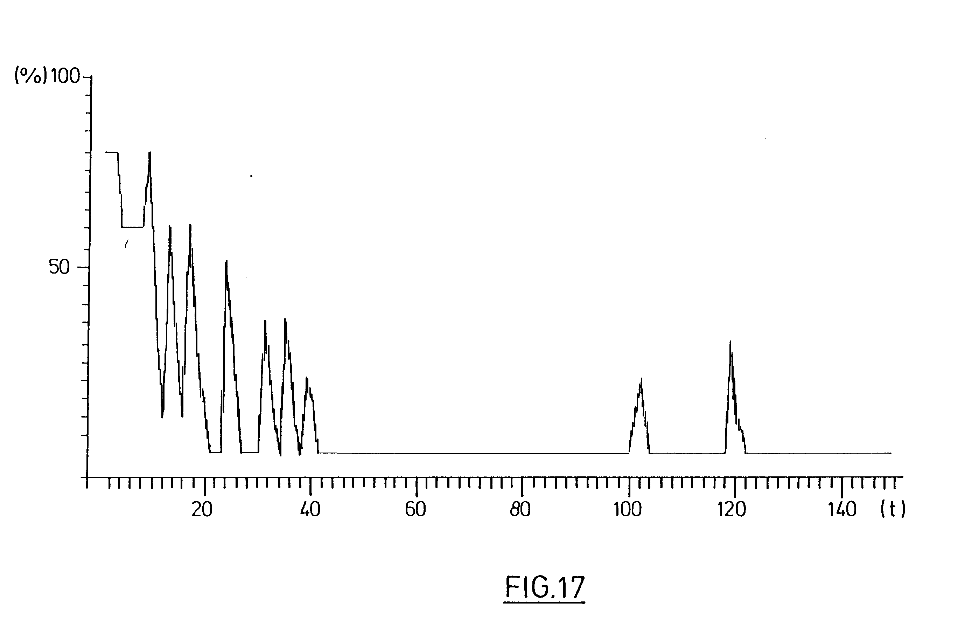

Die in diesem Fall aufzubringende Mikrowellenenergie ergibt sich aus dem Diagramm gemäß Figur 17.

## Patentansprüche

1. Verfahren zum zumindest teilweisen Aushärten von Dicht- und Klebemitteln, insbesondere bei der Direktverglasung von Kraftfahrzeugen, bei welchem Verfahren das Dicht- und Klebemittel durch Einstrahlung von Mikrowellenenergie erwärmt wird, **dadurch gekennzeichnet**,
- daß die Erwärmung durch örtlich begrenzte Beaufschlagung mit Mikrowellenenergie erfolgt, und
- daß die Mikrowellenenergie impulsartig in einer ersten und wenigstens einer weiteren Impulsgruppe, deren Impulsamplituden jeweils vom Anfang zum Ende der Gruppe abnehmen, und zwischen den Impulsgruppen dauerstrichartig aufgebracht wird.

2. Verfahren nach Anspruch 1, bei dem das Dicht- und Klebemittel bei eingesetzter Scheibe mit Mikrowellenenergie beaufschlagt wird, **dadurch gekennzeichnet**, daß das Dicht- und Klebemittel in zumindest einem Teilbereich beaufschlagt wird, so daß in diesem eine die Scheibe in ihrer eingesetzten Stellung fixierende Aushärtung des Dicht- und Klebemittels stattfindet, und daß die übrige Aushärtung des Dicht- und Klebemittels ohne Energiezufuhr erfolgt.

3. Verfahren nach Anspruch 2, **dadurch gekennzeichnet**, daß die Beaufschlagung in einander gegenüberliegenden Teilbereichen erfolgt.

4. Verfahren nach einem der vorhergehenden Ansprüche, **dadurch gekennzeichnet**, daß die Breiten aller Impulse einer Impulsgruppe gleich ist.

5. Verfahren nach einem der vorhergehenden Ansprüche, **dadurch gekennzeichnet**, daß vor der ersten Impulsgruppe ein Einzelimpuls aufgebracht wird, dessen Amplitude und Energieinhalt größer ist als diejenigen des ersten Impulses der ersten Impulsgruppe.

6. Verfahren nach einem der vorhergehenden Ansprüche zum zumindest teilweisen Aushärten eines Dicht- und Klebemittels, das zur Verbindung eines nicht-metallischen Bauteils mit einem Metallteil dient, **dadurch gekennzeichnet**, daß das Metallteil im Bereich des Dicht- und Klebemittels vorgewärmt wird.

7. Verfahren nach Anspruch 6, **dadurch gekennzeichnet**, daß das Metallteil auf 75°C bis 100°C, vorzugsweise 80°C bis 95°C erwärmt wird.

8. Verfahren nach einem der vorhergehenden Ansprüche, **dadurch gekennzeichnet**, daß ein langsam aushärtendes Dicht- und Klebemittel verwendet wird, das vor dem Auftragen auf die zu verbindenden Bauteilen mit Mikrowellenenergie beaufschlagt wird.

## Claims

1. A process for the at least partial curing of sealants and adhesives, especially in the case of the direct glazing of motor vehicles, in which process the sealants and adhesives are heated by irradiation with microwave energy, characterized in that
- the heating occurs by locally limited impingement of microwave energy, and
- the microwave energy is applied in pulsed form, in a first and at least one further pulse group whose pulse amplitudes in each case diminish from the beginning to the end of the group, and between the pulse groups continuously.

2. A process according to Claim 1, in which, with the pane inserted, the sealant and adhesive are irradiated with microwave energy, characterized in that a part of the area of the sealant and adhesive is irradiated, so that in this part of the area a curing of the sealant and adhesive occurs which fixes the pane in its inserted position, and that the remaining curing of the sealant and adhesive occurs without the supply of energy.

3. A process according to Claim 2, characterized in that the irradiation occurs in parts of the area opposite to each other.

4. A process according to one of the preceding claims, characterized in that the widths of all pulses of a pulse group are equal.

5. A process according to one of the preceding claims, characterized in that before the first pulse group a single pulse is applied, whose amplitude and energy content is greater than that of the first pulse of the first pulse group.

6. A process according to one of the preceding claims for the at least partial curing of a sealant and adhesive that serves for the bonding of a non-metallic component with a metallic component, characterized in that the metallic component is preheated in the zone of the sealant and adhesive.

7. A process according to Claim 6, characterized in that the metallic component is heated to 75 to 100 °C, preferably 80 to 95 °C.

8. A process according to one of the preceding claims, characterized in that a slowly curing sealant and adhesive is used, that before application to the components to be bonded is irradiated with microwave energy.

## Revendications

1. Procédé de durcissement au moins partiel de produits d'étanchéité et de collage, utilisable notamment dans le montage direct de surfaces vitrées dans une automobile, et dans lequel les produits sont chauffés par irradiation au moyen de l'énergie de micro-ondes, procédé caractérisé en ce que l'échauffement est réalisé par une action limitée localement par l'énergie de micro-ondes, l'énergie des micro-ondes étant délivrée sous forme d'impulsions, dans un premier et au moins un deuxième groupe dont les amplitudes d'impulsions vont décroissant du début à la fin, et est appliquée entre les groupes d'impulsions de manière continue.

2. Procédé selon la revendication 1, dans lequel les produits d'étanchéité et de collage reçoivent, après la mise en place de la surface vitrée, de l'énergie par micro-ondes, caractérisé en ce que les produits agissent au moins sur une zone partielle de manière à produire, dans cette zone, le durcissement des produits d'étanchéité et de collage assurant la fixation de la surface vitrée dans sa position de montage, le durcissement restant des produits d'étanchéité et de collage s'effectuant sans apport d'énergie.

3. Procédé selon la revendication 2, caractérisé en ce que l'irradiation s'effectue sur des zones partielles opposée.

4. Procédé selon l'une des revendications précédentes, caractérisé en ce que les grandeurs de toutes les impulsions d'un groupe d'impulsions sont égales.

5. Procédé selon l'une des revendications précédentes, caractérisé en ce qu'avant le premier groupe d'impulsions, une impulsion individuelle est appliquée dont l'amplitude et l'énergie sont supérieures à celles de la première impulsion du premier groupe d'impulsions.

6. Procédé selon l'une des revendications précédentes, appliqué au durcissement au moins partiel d'un produit d'étanchéité et de collage destiné à réunir un élément non métallique et un élément métallique, caractérisé en ce que l'élément métallique est préchauffé dans la zone d'étanchéité et de collage.

7. Procédé selon la revendication 6, caractérisé en ce que l'élément métallique est chauffé à une température comprise entre 75° et 100°, de préférence 80° à 95°.

8. Procédé selon l'une des revendications précédentes, caractérisé en ce qu'il est fait usage d'un produit d'étanchéité et de collage à durcissement lent est sollicité par des micro-ondes avant de le mettre en place sur les éléments à réunir.
